# EUROPEAN PATENT SPECIFICATION

(11) **EP 2 877 767 B1**
(45) Date of publication and mention of the grant of the patent: **19.12.2018**
(21) Application number: 13823538.7
(22) Date of filing: 26.07.2013
(51) Int. Cl.: F16L 11/04, F16L 11/20, B29C 47/56, B29C 47/00, B29C 47/06, B29C 47/20, B29C 47/70, B32B 1/08, B32B 27/08, B32B 27/32, B29L 23/00

(54) **MULTILAYER FLEXIBLE TUBE**
MEHRLAGIGER SCHLAUCH
TUYAU SOUPLE MULTI-COUCHES

(30) Priority: 26.07.2012 US 201261676082 P; 19.11.2012 US 201261728052 P
(43) Date of publication of application: 03.06.2015
(73) Proprietor: Saint-Gobain Performance Plastics Corporation, Solon, OH 44139 (US)
(72) Inventor: SIDDHAMALLI, Sridhar Krishnamurthi, Lutz, Florida 33558 (US); SIMON, Mark W., Pascoag, Rhode Island 02859 (US)
(74) Representative: Zimmermann & Partner Patentanwälte mbB
(86) International application number: PCT/US2013/052311
(87) International publication number: WO 2014/018877

(56) References cited:
- WO-A2-2012/016571
- WO-A2-2012/037462
- US-A1- 2005 147 779
- US-A1- 2008 187 701
- US-A1- 2010 108 172
- US-A1- 2011 241 262

## Description

### FIELD OF THE DISCLOSURE

This disclosure in general relates to a flexible tube and in particular, to multilayer flexible tubes.

### BACKGROUND

Flexible tube is used in a variety of industries and household products. In particular, flexible tube is often used in healthcare products, such as catheters and other medical or biopharm tubing. In addition, flexible tube is used in household products such as hydration products, including portable water containers. However, conventional tube for such applications is made using plasticized polyvinyl chloride, which represents environmental and health hazards.

Polyvinyl chloride based products have been used widely in medical fields for healthcare products such as films, gloves, bags, catheters and tubing. In particular, most of the disposable medical devices are produced from plasticized flexible PVC. However, there is a concern that PVC products are hazardous to both the environment and personal health. Incineration of PVC containing medical waste results in the release of hydrochloric acid and PVC is viewed as a major contributor to HCl in incinerator flue gases. In addition, PVC may also contribute to polychlorinated dibenzodioxin and furan toxins formed during incineration. Levels of these toxins have been found up to three times greater in medical infectious waste compared to municipal waste streams.

In addition to incineration concerns, the problem of elution of plasticizers into blood, medical solutions or foods when products made of flexible PVC tube are being used is considered a potential health hazard. To form flexible PVC products, manufacturers typically use plasticizers or processing aids. In particular, exposure to processing aids or plasticizers, such as di-2-ethylhexylphthalate (DEHP), represent a number of health related concerns. In particular, DEHP is suspected of reducing blood platelet efficacy and is suspected of reproductive toxicity, especially to the reproduction system of young males. Since conventional tube uses a PVC-based flexible composition and such tube is commonly used to transfer or handle fluids of medicines, foods and beverages, any eluted processing aids or plasticizers can end up in the body of consumers and thus increase their risk of exposure to toxic plasticizers. US 2010/108172 is concerned with a flexible tube comprising: a first layer comprising a polyolefin material; and a second layer directly bonded to and in direct contact with the first layer, the second layer comprising a blend of propylenic polymer and styrenic block copolymer. US 2011/241262 A1 is concerned with a flexible tubing material comprising a radiation crosslinked blend of: a) a first elastomeric polymer including a styrenic thermoplastic elastomer, an ethylene vinyl acetate elastomer, a polyolefin elastomer, or combination thereof; and b) a second elastomeric polymer including a polyolefin elastomer, a diene elastomer, or combination thereof, with the proviso that the first elastomeric polymer and the second elastomeric polymer are different. WO 2012/037462 A2 is concerned with a flexible tube comprising a mixture of a polyolefin and a styrenic based block copolymer, wherein the styrenic based block copolymer has an A-B-A block configuration and a molecular weight of at least about 350 kg/mol.

Accordingly, flexible tube that reduces the environmental and health concerns associated with PVC-based flexible compositions would be desirable.

### SUMMARY

In an embodiment, a flexible tube, as defined in claim 1, includes a first polymer layer including a polyolefin, an ethylene vinyl acetate copolymer, an ethylene/norbornene copolymer, a styrenic block copolymer, a styrene butadiene copolymer, or combination thereof having a total organics content of less than 12 µg/mL per USP 34, Chapter 643 such as less than about 5.0 µg/mL; and a second polymer layer adjacent to the first polymer layer, the second polymer layer including a polyolefin, a styrenic block copolymer, a blend thereof, or combination thereof, wherein the second polymer layer has a shore A durometer of less than about 65.

In another embodiment, a method of forming a flexible tube, as defined in claim 9, includes extruding a first polymer layer including a polyolefin, an ethylene vinyl acetate copolymer, an ethylene/norbornene copolymer, a styrenic block copolymer, a styrene butadiene copolymer, or combination thereof having a total organics content of less than 12 µg/mL per USP 34, Chapter 643, such as less than about 5 µg/mL; and extruding a second polymer layer adjacent to the first polymer layer, the second polymer layer including a polyolefin, a styrenic block copolymer, a blend thereof, or combination thereof, wherein the second polymer layer has a shore A durometer of less than about 65.

### BRIEF DESCRIPTION OF THE DRAWINGS

The present disclosure may be better understood, and its numerous features and advantages made apparent to those skilled in the art by referencing the accompanying drawings.

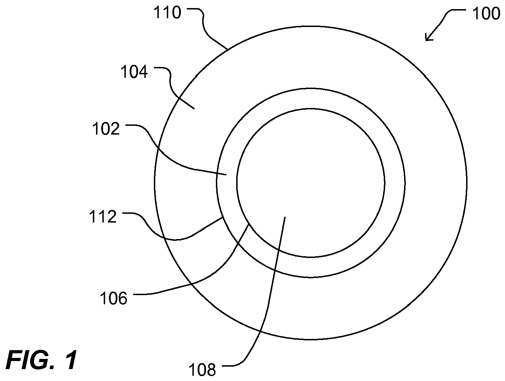

FIG. 1 includes an illustration of exemplary tubing.

The use of the same reference symbols in different drawings indicates similar or identical items.

### DESCRIPTION OF THE DRAWINGS

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other teachings can certainly be used in this application.

As used herein, the terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in reference books and other sources within the structural arts and corresponding manufacturing arts.

A flexible tube includes a first polymer layer and a second polymer layer that is adjacent to the first polymer layer. The first polymer layer includes a high purity thermoplastic elastomer having a total organics content of less than 12 µg/mL, such as less than about 10 µg/mL, or even less than about 5 µg/mL per USP 34, Chapter 643 under extraction conditions of 50°C for 72 hours when unsterilized. When sterilized by gamma irradiation, the high purity thermoplastic elastomer has a total organics content of less than about 35 µg/mL, such as less than about 30 µg/mL, or even less than about 20 µg/mL. The second polymer layer includes a thermoplastic elastomer that has a shore A durometer of less than about 65. The tube including the first polymer layer and the second polymer layer is flexible with an inner surface that has low to no levels of extractables in a fluid environment and improved mechanical properties.

The flexible tube includes the first polymer layer formed of the high purity thermoplastic elastomer that has the total organics content as described. Any reasonable polymer for the first polymer layer having the total organics content as described is envisioned. In an exemplary embodiment, the high purity thermoplastic elastomer of the first polymer layer is chosen for desirable properties such as its barrier properties, low water absorption, low temperature performance, resistance to leaching in a fluid environment, hydrophobicity to prevent protein adhesion, resistance to chemicals (i.e. inert), resistance to heat, substantial transparency or translucency, or any combination thereof. For instance, the high purity first polymer layer is a polyolefin, an ethylene vinyl acetate copolymer, an ethylene/norbornene copolymer, a styrenic block copolymer, styrene butadiene copolymer, or combination thereof.

The first polymer layer includes any reasonable polyolefin elastomer. The polyolefin may include a homopolymer, a copolymer, a terpolymer, an alloy, or any combination thereof formed from a monomer, such as ethylene, propylene, butene, pentene, methyl pentene, hexene, octene, or any combination thereof. In an embodiment, the polyolefin is a polyethylene, such as a very low density polyethylene (VLDPE). In a particular embodiment, the very low density polyethylene (VLDPE) has a density of less than 0.915 g/cc, such as 0.880 g/cc to 0.914 g/cc. In another embodiment, the polyolefin is a polypropylene, such as a reactor grade polypropylene. The reactor grade polypropylene is an impact resistant, heterophasic polypropylene random copolymer that is not nucleated. In particular, the reactor grade polypropylene has an engineered phase morphology to achieve at least one desirable property, such as transparency, temperature resistance, vacuum resistance, burst resistance, or any combination thereof. Typically, the reactor grade polypropylene is a two polymer system with two distinct phases. In a particular embodiment, the polypropylene forms a matrix with a rubber phase dispersed therein, wherein the rubber phase may be a polyolefin rubber, such as an ethylene propylene rubber (EPR). The addition of the dispersed phase within the polypropylene, which is typically opaque, improves the toughness of the reactor grade polypropylene. In a particular embodiment, the reactor grade polypropylene has two distinct glass transition temperatures (T_{g}) of about -4°C (polypropylene matrix) and about -50°C (dispersed ethylene propylene rubber phase). Other properties of the reactor grade polypropylene include, for example, a flexural modulus of about 550 MPa (ISO 178), a melt flow rate at 230°C/2.16 kg of about 4g/10 minutes (ISO 1133), a melting point of about 142°C (DSC), a Vicat softening point of about 120°C (ISO 306), a haze of less than about 1% (ASTM D1003), a regulatory status of European Pharmacopoeia EP 3.1.3/3.1.6/3.2.2, a regulatory status of United Stated Pharmacopoeia USP Class VI, approval for food contact per US FDA and EU, or any combinations thereof. In an embodiment, the polyolefin is a chemically resistant polypropylene, polyethylene, or combination thereof. In an embodiment, the polyolefin is a polyethylene, such as a very low density polyethylene (VLDPE), a polyolefin plastomer (POP), a polyolefin elastomer (POE), or combination thereof. In a particular embodiment, the polyolefin plastomer or the polyolefin elastomer is polyethylene based, polypropylene based, or combination thereof.

In a particular embodiment, the very low density polyethylene (VLDPE), polyolefin plastomer (POP), and polyolefin elastomer (POE) have advantageous properties. The polyolefin has a density of less than 0.915 g/cc. The polyolefin is, for instance, a very low density polyethylene (VLDPE), a polyolefin plastomer (POP), a polyolefin elastomer (POE) based on polyethylene and polypropylene, or combination thereof. In particular, the very low density polyethylene (VLDPE) has a density of less than 0.915 g/cc. In an embodiment, the polyolefin elastomer and the polyolefin plastomer (POE and POP) have a density range of 0.863 g/cc to 0.910 g/cc. Density of reactor grade polypropylene is typically not greater than 0.905 g/cc. In comparison, a linear low density polyethylene (LLDPE) has a density greater than 0.915 g/cc, such as 0.915 g/cc to 0.94 g/cc. Density is typically measured by, for example, ASTM D792, ASTM D1505, or ISO 1183.

Further, the polyolefin of the present invention has a desirable flexibility. For instance, the polyolefin, such as the very low density polyethylene (VLDPE), the polyolefin plastomer (POP), and the polyolefin elastomer (POE), are more flexible than that of a linear low density polyethylene (LLDPE). For instance, flexural modulus and tensile modulus are a measure of stiffness and the greater the number, the stiffer the material. At a measure of 1% secant, the tensile modulus for the very low density polyethylene (VLDPE) is 117 MPa, the flexural modulus for the polyolefin elastomer (POE) is 83.1 MPa, and the flexural modulus for the linear low density polyethylene (LLDPE) is at least 221MPa. At a measure of 2% scant, the flexural modulus for the polyolefin plastomer (POP) is about 80 MPa. Flexural modulus, is measured by ASTM D790, and tensile modulus, is measured by ASTM D638. Furthermore, the very low density polyethylene (VLDPE), the polyolefin plastomer (POP), and the polyolefin elastomer (POE) are more flexible, less stiff, and less crystalline as evidenced by a lower VICAT softening point and a lower melting point as compared to linear low density polyethylene (LLDPE). For instance, the VICAT softening point for the very low density polyethylene (VLDPE) is 86.1°C, for the polyolefin elastomer (POE) is 89°C, for the polyolefin plastomer (POP) is 45°C, and for the linear low density polyethylene (LLDPE) is 98.90°C, as measured by ASTM D1525. Furthermore, the melting point, as determined by a differential scanning calorimeter (DSC), for the very low density polyethylene (VLDPE) is 118°C, for the polyolefin elastomer (POE) is 99°C, for the polyolefin plastomer (POP) is 63°C, and the linear low density polyethylene (LLDPE) is greater than 119°C. With respect to crystallinity, the polyolefin plastomer (POP), polyolefin elastomer (POE), and very low density polyethylene (VLDPE) are less crystalline than a linear low density polyethylene (LLDPE). The degree of crystallinity may be due to comonomer content in the polyolefin. For instance, a polyolefin may be formed by copolymerizing an alpha olefin from C₃ to C₂₀ with ethylene to produce, for instance, linear low density polyethylene (LLDPE), very low density polyethylene (VLDPE), polyolefin elastomer (POE), and polyolefin plastomer (POP). Comonomer content indicates the amount of alpha olefin contained within the polyolefin. For instance, the linear low density polyethylene (LLDPE) has about 2.5 to 3.5 mol% comonomer, the very low density polyethylene (VLDPE), the polyolefin elastomer (POE), and the polyolefin plastomer (POP) have a comonomer content of about 4.0 mol.% to about 25 mol.%. Accordingly, with a low comonomer content, a less crystalline polyolefin, such as a very low density polyethylene (VLDPE), a polyolefin plastomer (POP), or a polyolefin elastomer (POE) is formed to provide a more flexible polyolefin than a linear low density polyethylene (LLDPE). The properties, such as density and flexibility, of the very low density polyethylene (VLDPE), the polyolefin plastomer (POP), and the polyolefin elastomer (POE) provide a desirable flexible tube compared to a tube made with a material such as a linear low density polyethylene (LLDPE).

In an embodiment, the polyolefin elastomer may be copolymers, such as a copolymer of ethylene with propylene or an alpha-olefin or a copolymer of polypropylene with ethylene or an alpha-olefin made by a metallocene or a non-metallocene polymerization process. Commercial polyolefin examples include Affinity™, Engage™, Flexomer™, Versify™, Infuse™, Exact™, Vistamaxx™, Softel™ and Tafimer™, Notio™ produced by Dow, ExxonMobil, Londel-Basell and Mitsui.

In another embodiment, the polyolefin elastomer can be a terpolymer of ethylene, maleic anhydride and acrylates such as Lotader™ made by Arkema and Evalloy™ produced by DuPont. In yet another embodiment, the polyolefin elastomer can be an ionomer of ethylene and acrylic acid such as Surlyn™ made by DuPont. In an embodiment, the polyolefin is a reactor grade thermoplastic polyolefin elastomer, such as Bormed SC820CF available from Borealis Group, Europe. In an embodiment, the first polymer layer may include a copolymer of ethylene with a polar vinyl monomer such as acetate (EVA), acrylic acid (EAA), methyl acrylate (EMA), methyl methacrylate (EMMA), ethyl acrylate (EEA), butyl acrylate (EBA), or combination thereof. Exemplary suppliers of these ethylene copolymer resins include DuPont, Dow Chemical, Mitusi and Arkema. In a particular embodiment, the first polymer layer is an ethylene vinyl acetate. In a more particular embodiment, the first polymer is an additive-free ethylene vinyl acetate. "Additive-free" as used herein refers to an ethylene vinyl acetate copolymer that is at least about 99.99%, or even about 100% of the ethylene and vinyl acetate monomeric units without the addition of any additives. In an example, the ethylene vinyl acetate is at least partially crystalline, i.e. has a crystalline melting point. The amount of vinyl acetate found in the ethylene vinyl acetate polymer determines the crystallinity of the polymer. In particular, the higher the percentage of vinyl acetate in the EVA copolymer, the more the crystalline regularity of the ethylene chain is disturbed or destroyed. Crystallization is progressively hindered and is substantially absent with an EVA copolymer containing greater than about 50% vinyl acetate, rendering an amorphous polymer. In an embodiment, the ethylene vinyl acetate has a vinyl acetate content of less than about 50% by weight of the total weight of the ethylene vinyl acetate to render an at least partially crystalline copolymer. In a particular embodiment, the ethylene vinyl acetate has a vinyl content of about 3% by weight to about 28% by weight of the total weight of the ethylene vinyl acetate.

In another embodiment, the first polymer layer may include a cyclic olefin, such as a bicyclic olefin. In a particular embodiment, the bicyclic olefin is norbornene. The cyclic olefin can include a copolymer of the cyclic olefin with an olefin monomer such as ethylene, propylene, butene, pentene, methyl pentene, hexene, octene, or any combination thereof. In an embodiment, the polyolefin elastomer may be a copolymer of ethylene with norbornene. A commercially available ethylene/norbornene example is Topas™ produced by Topas Advanced Polymers.

In an embodiment, the first polymer layer may include a styrenic copolymer such as a styrenic block copolymer or a styrene butadiene copolymer. The styrenic block copolymer includes a block copolymer having a block of polystyrene. In an example, the styrenic block copolymer includes at least two polystyrene blocks. In a particular example, the styrenic block copolymer includes at least one hydrogenated conjugated diene polymer block. The at least one hydrogenated conjugated diene polymer block is formed from a conjugated diene polymer block that provides a high vinyl content before hydrogenation. For example, a conjugated diene monomer may include 4 to 8 carbon atoms, such as monomers 1,3-butadiene, 2-methyl-1,3-butadiene (isoprene), 2,3-dimethyl-1,3-butadiene, 1,3-pentadiene, 1,3-hexadiene, or any combination thereof. In particular, the conjugated diene monomer may include 1,3-butadiene or isoprene. For example, the conjugated diene monomer may be 1,3-butadiene. In a particular example, the conjugated diene polymer block formed from such conjugated diene monomers has a vinyl content before hydrogenation of at least about 50%, such as at least about 60%, or even at least about 65%. In a particular embodiment, the vinyl content of the conjugated diene blocks is less than about 70%.

The styrenic block copolymer also includes styrenic blocks. For example, the styrenic blocks may be formed from one or more monomers, such as styrene, o-methylstyrene, p-methylstyrene, p-tert-butylstyrene, 2,4-dimethylstyrene, α-methylstyrene, vinylnaphthalene, vinyltoluene, vinylxylene, or any combination thereof. In an example, the styrenic block may include styrene, α-methylstyrene or para-methylstyrene. In a particular example, the styrenic block includes styrene.

In a particular embodiment, the styrenic copolymer may be a hydrogenated styrenebutadiene-styrene block copolymer, a hydrogenated styrene-isoprene-styrene block copolymer, variations thereof, or any combination thereof. In another example, the styrenic block copolymer may be a styrene-ethylene-butylene-styrene block copolymer (SEBS), a styrene-ethylene-propylene-styrene block copolymer (SEPS), a styrene-ethylene-ethylene-butylene-styrene block copolymer (SEEBS), a styrene-ethylene-ethylene-propylene-styrene block copolymer (SEEPS), or any combination thereof. Exemplary styrenic block copolymers include polymers available from Kraton™ Polymers of Houston, USA or Kuraray Co. Ltd., of Kurashiki, Japan, Septon™ Polymers and Hybrar™ Polymers of Kuraray Co. Ltd., of Kurashiki, Japan. In a particular example, the styrenic copolymer is a styrene butadiene copolymer (SBC) such as K-Resin® Polymers of Chevron Phillips Chemical Company, LLC of The Woodlands, Texas.

The first polymer layer has a shore A durometer that is equal to or greater than the shore A durometer of the second polymer layer. In a particular embodiment, the first polymer layer has a shore A durometer of at least about 35, such as at least about 50, such at least about 70, or even greater than about 90, with the proviso that the shore A durometer is greater than the shore A durometer of the second polymer layer. In an embodiment, the shore A of the first polymer layer is not greater than 95. In an embodiment, the shore A of the first polymer layer is 35 to 95. In a more particular embodiment, the first polymer layer is a polyolefin having a shore A not greater than 95. For instance, the shore A of a polyolefin such as a very low density polyethylene (VLDPE), a polyolefin elastomer (POE), and a polyolefin plastomer (POP) is not greater than 95. In contrast, a linear low density polyethylene (LLDPE) has a shore D of at least 50, which is substantially greater than a shore A of 95. Durometer is measured by ASTM D2240.

In an example, the first polymer layer is substantially free of additives that are potentially extractable when in contact with a fluid environment, the fluid environment being dependent upon the final application of the flexible tube. In a particular embodiment, the first polymer layer is substantially free of additives, such as stabilizers, fillers, waxes, colorants, lubricants, processing aids, polymerization catalyst residues, acid scavengers, anti-static agents, plasticizers, or combinations thereof. For instance, the first polymer layer has less than about 1.0% by weight of additives, such as less than about 0.75% by weight of additives, or even less than about 0.5% by weight of additives based on the total weight % of the first polymer layer.

In an embodiment, the first polymer layer has desirable properties as a fluid contact layer. In a particular embodiment, the first polymer layer has a low absorption, a low adsorption, a high contact angle, a low wettability, biocompatibility, low temperature brittleness point, or any combination thereof. For instance, the low temperature brittleness point is the temperature at which the tube fractures when flexed. For instance, a very low density polyethylene (VLDPE) has a low temperature brittleness point of less than -100°C (Celsius), when measured by ASTM D746. In contrast, a linear low density polyethylene (LLDPE) has a low temperature brittleness point of -30°C to -76°C, as measured by ASTM D746. Thus, a very low density polyethylene (VLDPE) withstands a lower temperature, while maintaining its structural integrity compared to a linear low density polyethylene (LLDPE). Further, the first layer is resistant to binding or adsorption with proteins, such as bovine serum albumin (BSA), bovine polyclonal immunoglobulin (IgG), milk-based proteins, and the like.

The flexible tube further includes a second polymer layer that overlies the first polymer layer. Any reasonable thermoplastic elastomer for the second polymer layer is selected depending on the desired properties for the final multilayer flexible tubing. For instance, the thermoplastic elastomer may be chosen to provide properties such as mechanical strength, flexibility, softness, chemical inertness, barrier properties, substantial transparency or translucency, biocompatibility, or any combination thereof to the final multilayer flexible tubing.

In an exemplary embodiment, the second polymer layer is a thermoplastic elastomer having a shore A durometer that is less than the shore A durometer of the first polymer layer. In a particular embodiment, the shore A durometer of the second polymer layer is less than about 65, such as about 30 to about 65, or even about 40 to about 50. In an embodiment, the lower shore A durometer of the second polymer layer provides flexibility to the stiffer, less flexible first polymer layer. In an embodiment, the second polymer layer is a polyolefin, a styrenic block copolymer, a blend thereof, or combination thereof.

Any reasonable polyolefin as discussed above is envisioned, with the proviso that the first polymer layer and the second polymer layer are different materials. A typical polyolefin may include a homopolymer, a copolymer, a terpolymer, an alloy, or any combination thereof formed from a monomer, such as ethylene, propylene, butene, pentene, methyl pentene, hexene, octene, or any combination thereof. In an embodiment, the polyolefin is a polyethylene, such as a very low density polyethylene (VLDPE). In a particular embodiment, the very low density polyethylene (VLDPE) has a density of less than 0.915 g/cc, such as 0.880 g/cc to 0.914 g/cc. In another embodiment, the polyolefin is a polypropylene. In an embodiment, the polyolefin is a polyolefin elastomer or a polyolefin plastomer (POE and POP) that are ethylene based, propylene based, or combination thereof.

In an embodiment, the polyolefin elastomer may be any reasonable copolymer as discussed above. In a particular embodiment, the polyolefin elastomer is a copolymer of ethylene with propylene or an alpha-olefin or a copolymer of polypropylene with ethylene or an alpha-olefin made by a metallocene or a non-metallocene polymerization process. Commercial polyolefin examples include Affinity™, Engage™, Flexomer™, Versify™, Infuse™, Exact™, Vistamaxx™, Softel™ and Tafmer™, Notio™ produced by Dow, ExxonMobil, Londel-Basell and Mitsui.
In another embodiment, the polyolefin elastomer can be a terpolymer of ethylene, maleic anhydride and acrylates such as Lotader™ made by Arkema and Evalloy™ produced by DuPont. In yet another embodiment, the polyolefin elastomer can be an ionomer of ethylene and acrylic acid such as Surlyn™ made by DuPont. In an embodiment, the polyolefin is a reactor grade thermoplastic polyolefin elastomer, such as Bormed SC820CF available from Borealis Group, Europe.

In an embodiment, the second polymer layer may include a copolymer of ethylene with a polar vinyl monomer such as acetate (EVA), acrylic acid (EAA), methyl acrylate (EMA), methyl methacrylate (EMMA), ethyl acrylate (EEA) and butyl acrylate (EBA). Exemplary suppliers of these ethylene copolymer resins include DuPont, Dow Chemical, Mitusi and Arkema etc. In a particular embodiment, the second polymer layer is an ethylene vinyl acetate.

In an embodiment, the second polymer layer may include the styrenic block copolymer. Any reasonable styrenic block copolymer is envisioned, with the proviso that the first polymer layer and the second polymer layer are different materials. The styrenic block copolymer includes a block copolymer having a block of polystyrene. In an example, the styrenic block copolymer includes at least two polystyrene blocks. In a particular example, the styrenic block copolymer includes at least one hydrogenated conjugated diene polymer block. The at least one hydrogenated conjugated diene polymer block is formed from a conjugated diene polymer block that provides a high vinyl content before hydrogenation. For example, a conjugated diene monomer may include 4 to 8 carbon atoms, such as monomers 1,3-butadiene, 2-methyl-1,3-butadiene (isoprene), 2,3-dimethyl-1,3-butadiene, 1,3-pentadiene, 1,3-hexadiene, or any combination thereof. In particular, the conjugated diene monomer may include 1,3-butadiene or isoprene. For example, the conjugated diene monomer may be 1,3-butadiene. In a particular example, the conjugated diene polymer block formed from such conjugated diene monomers has a vinyl content before hydrogenation of at least about 50%, such as at least about 60%, or even at least about 65%. In a particular embodiment, the vinyl content of the conjugated diene blocks is less than about 70%.

The styrenic block copolymer also includes styrenic blocks. For example, the styrenic blocks may be formed from one or more monomers, such as styrene, o-methylstyrene, p-methylstyrene, p-tert-butylstyrene, 2,4-dimethylstyrene, α-methylstyrene, vinylnaphthalene, vinyltoluene, vinylxylene, or any combination thereof. In an example, the styrenic block may include styrene, α-methylstyrene or para-methylstyrene. In a particular example, the styrenic block includes styrene.

In a particular embodiment, the styrenic block copolymer may be a hydrogenated styrenebutadiene-styrene block copolymer, a hydrogenated styrene-isoprene-styrene block copolymer, variations thereof, or any combination thereof. In another example, the styrenic block copolymer may be a styrene-ethylene-butylene-styrene block copolymer (SEBS), a styrene-ethylene-propylene-styrene block copolymer (SEPS), a styrene-ethylene-ethylene-butylene-styrene block copolymer (SEEBS), a styrene-ethylene-ethylene-propylene-styrene block copolymer (SEEPS), or any combination thereof. In particular example, the styrenic block copolymer is SEBS. Exemplary styrenic block copolymers include polymers available from Kraton™ Polymers of Houston, USA or Kuraray Co. Ltd., of Kurashiki, Japan.

In an exemplary embodiment, the second polymer layer is a blend. In an embodiment, the second polymer is a blend comprising about 10% by weight to about 75% by weight, such as about 25% by weight to about 75% by weight, such as about 15% by weight to about 60% by weight, or even about 20% by weight to about 50% by weight, of a polyethylene, polyolefin elastomer, polyolefin plastomer, or combination thereof, based on the total weight of the second polymer layer. In a particular embodiment, the blend is of the polyolefin and the styrenic block copolymer. For instance, the blend includes the propylene polymer in an amount of about 5% by weight to about 90% by weight, such as about 5% by weight to about 40% by weight, such as about 5% by weight to about 30% by weight, such as about 5% by weight to about 25% by weight, such as about 5% by weight to about 20% by weight, or even about 30% by weight to about 90% by weight, based on the total weight of the second polymer layer. In an embodiment, the blend includes the styrenic block copolymer in an amount of about 10% by weight to about 95% by weight, such as about 10% by weight to about 70% by weight, such as about 60% by weight to about 95% by weight, such as about 70% by weight to about 95% by weight, such as about 75% by weight to about 95% by weight, or even about 80% by weight to about 95% by weight, of the total weight of the second polymer layer. In an example, the blend may include the propylene polymer in an amount in a range of about 20% by weight to about 70% by weight, such as a range of about 30% by weight to about 60% by weight of the total weight of the second polymer layer with the styrenic block copolymer in an amount in a range of about 30% by weight to about 80% by weight, such a range of about 40% by weight to about 70% by weight of the total weight of the second polymer layer. In particular, it is noted that in the second polymer layer in which the propylene polymer content is not greater than 80% by weight of the total weight of the second polymer, the second polymer layer is generally transparent or slightly translucent.

In an example, the second polymer layer may include an oil. Any suitable oil may be envisioned. In a particular embodiment, the oil is mineral oil that is either paraffinic or naphthenic or a mixture of paraffinic or naphthenic with zero aromatic content. For instance, a mineral oil may be used at an amount of about 10% by weight to about 70% by weight of the total weight of the second polymer layer. In a particular embodiment, the mineral oil is present with the blend of the polypropylene and the styrenic block copolymer. In an alternative embodiment, the second polymer layer is substantially oil-free. "Substantially oil-free" as used herein refers to a second polymer layer that includes mineral oil present at less than about 0.1% by weight of the total weight of the second polymer layer.

In an exemplary embodiment, the second polymer layer further includes any additive envisioned such as a lubricant, a filler, a plasticizer, an antioxidant, or any combination thereof. Exemplary lubricants include silicone oil, waxes, slip aids, antiblock agents, and the like. Exemplary lubricants further include silicone grafted polyolefin, polyethylene or polypropylene waxes, Oleic acid amide, erucamide, stearate, fatty acid esters, and the like. Typically, the lubricant may be present at less than about 2.0% by weight of the total weight of the second polymer layer. In an embodiment, the lubricant may be present at less than about 0.5% by weight of the total weight of the second polymer layer. Exemplary antioxidants include phenolic, hindered amine antioxidants. Exemplary fillers include calcium carbonate, talc, radio-opaque fillers such as barium sulfate, bismuth oxychloride, any combinations thereof, and the like. Exemplary plasticizers include any known plasticizers such as mineral oils and the like. Typically, an additive may be present at an amount of not greater than about 50% by weight of the total weight of the second polymer layer, such as not greater than about 40% by weight of the total weight of the second polymer layer, or even not greater than about 30% by weight of the total weight of the second polymer layer. Alternatively, the second polymer layer may be free of lubricants, fillers, plasticizers, and antioxidants.

FIG. 1 includes an illustration of a cross-section of an exemplary flexible tube 100. In an embodiment, the flexible tube 100 including a first polymer layer 102 and a second polymer layer 104. The first polymer layer 102 is an inner layer or liner that forms an inner surface 106 that defines a lumen 108 for fluid flow therethrough. In an example, the second polymer layer 104 forms an outer surface 110 of the flexible tube 100. In a particular embodiment, the first polymer layer 102 and the second polymer layer 104 are in direct contact and directly bound to each other at a surface 112, absent any intervening layers. In an embodiment, the first polymer layer 102 and the second polymer layer 104 bond to each other without the need of a primer or an adhesive. The surface 112 may be free of adhesive or other treatment to increase the adhesive properties of the first polymer layer 102 to the second polymer layer 104, such free of a surface treatment. In an alternative embodiment, the flexible tube 100 may include any reasonable intervening layer such as a tie layer, an adhesive layer, reinforcing layer, and the like (not shown) between first polymer layer 102 and second polymer layer 104. For instance, a reinforcing layer may be disposed between the first polymer layer 102 and the second polymer layer 104, or substantially embedded within the second polymer layer 104. Substantially embedded" as used herein refers to a reinforcing layer wherein at least 25%, such as at least about 50%, or even 75% of the total surface area of the reinforcing layer is directly in contact with the second polymer layer. In an embodiment, the surface 112 may be treated by any reasonable means to increase the adhesion of the first polymer layer 102 to the layer it directly contacts. In an embodiment, the first polymer layer 102 directly contacts the second polymer layer 104.

In a particular embodiment, the first polymer layer 102 directly contacts a reinforcing layer (not shown). Any suitable reinforcing material is envisioned in any suitable configuration. In an example, the reinforcing layer may be a polymer, such as a polyolefin, a polyester, polyamide, polyaramid, or combination thereof. In an exemplary embodiment, the reinforcing layer is a polyolefin, such as a polypropylene. In a more particular embodiment, the reinforcing layer is braided such that the polymer is in the form of strands of yarn that are intertwined. The use of a reinforcing layer may provide further advantageous properties to the tube. For instance, the selection of the polymer material for the reinforcing layer may provide a compatible material that has desirable adhesion by maintaining a peel strength to both the first polymer layer and the second polymer layer of the tubing. In a particular embodiment, "desirable adhesion" may be defined as cohesive failure wherein the first polymer layer, the second polymer layer, or the reinforcing layer ruptures before the bond between the first polymer layer, the reinforcing layer, and the second polymer layer fails. The desirable adhesion would provide the benefits of, for instance, improved burst pressure, and increased pump performance, particularly at pump pressures of up to 0.55 MPa (80 psi), or greater, compared to a tube without a reinforcing layer or a tube with a reinforcing layer that is an incompatible material. With the desirable adhesion of the reinforcing layer to the first polymer layer and the second polymer layer, reduced volatiles that potentially outgas from the polymer yarn may be achieved as the reinforcing layer is sandwiched between the first polymer layer and the second polymer layer. In particular, such advantages would be present with a compatible material such as a polyolefin reinforcing layer, such as a polypropylene reinforcing layer.

In an example, the first polymer layer 102 forms about 1% to about 30% of the overall thickness of the flexible tube 100 and the second polymer layer 104 forms about 70% to about 99% of the thickness of the flexible tube 100. For example, the first polymer layer 102 may form about 1% to about 20% of the thickness, such as about 1% to about 10% of the thickness. The second polymer layer 104 may form about 80% to about 95% of the thickness, such as about 80% to about 90% of the thickness. In an example, the total thickness of the flexible tube 100 is not greater than about 6.35 mm (250 mil), such as not greater than about 5.08 mm (200 mil), or even not greater than about 3.81 mm (150 mil). Further, the total thickness of the flexible tube 100 may be at least about 0.508 mm (20 mil), such as at least about 1.27 mm (50 mil), or even at least about 2.54 mm (100 mil). The thickness of the first polymer layer 102 may be about 0.0254 mm (1 mil) to about 0.508 mm (20 mil), such as about 0.076 mm (3 mil) to about 0.381 mm (15 mil), or even about 0.127 mm (5 mil) to about 0.254 mm (10 mil). The thickness of the second polymer layer 104 may be about 0.508 mm (20 mil) to about 6.35 mm (250 mil), such as about 1.27 mm (50 mil) to about 5.08 mm (200 mil), such as about 2.54 mm (100 mil) to about 5.08 mm (200 mil), or even about 2.54 mm (100 mil) to about 3.81 mm (150 mil).

In an embodiment, the flexible tube may be formed by any reasonable means, such as extrusion. The first polymer layer and the second polymer layer may be extruded separately or coextruded. In an exemplary embodiment, a liner formed of the first polymer layer material may be coextruded with an outer layer formed of the second polymer layer material. The first polymer layer may directly contact and bind directly to the second polymer layer without intervening layers or adhesives. Further, the first polymer layer may be extruded absent additives, plasticizers or other processing aids. In an embodiment, a reinforcing layer may be disposed between the first polymer layer and the second polymer layer.

In particular, to form the flexible tube, pellets of the corresponding monomer or polymer may be compounded through a co-rotating intermeshing twin-screw extruder, cooled by a water bath, and cut into compound pellets. The resulting pellets of the blend are fed into an extruder with a tube die. Alternatively, with miscible blends, the compounding steps can be avoided and the pellets of the individual components dry mixed for extrusion into the tube. When the first and second polymer layers are coextruded, extruders are connected to a multilayer tube die. The first polymer layer material is fed to a first extruder and the second polymer layer material is fed to a second extruder.

Once formed, the flexible tube advantageously can withstand sterilization processes. In an embodiment, the flexible tube is sterilized by any method envisioned. Exemplary sterilization methods include steam, gamma, ethylene oxide, E-beam techniques, vaporous hydrogen peroxide (VHP), combinations thereof, and the like. In a particular embodiment, the flexible tube is sterilized by steam sterilization. In an exemplary embodiment, the flexible tube is heat-resistant to steam sterilization at temperatures up to about 121°C for a time of up to about 30 minutes. In an embodiment, the flexible tube is heat resistant to steam sterilization at temperatures of up to about 135°C for a time of up to about 20 minutes. In an embodiment, the flexible tube may be sterilized via gamma sterilization of up to about 50kGy, such as at least about 35 kGy, or even at least about 25 kGy.

The flexible tube may further be welded. Notably, "welding" and "sealing" can be used interchangeably and refers to welding two portions of the flexible tube together. For the purposes herein, "welding" refers to a 360° end to end tube connection (i.e. circumferential seal) and "sealing" refers to a sealing of an end to prevent fluid flow therethrough (i.e. flat seal). Any welding/sealing methods can be envisioned, for example, welding by heat, vibration, ultrasonic, infrared, radiofrequency (RF), combinations thereof, and the like. In a particular embodiment, an aseptic or sterile welder may be used, such as those typically used in the biopharmaceutical industry. Any reasonable parameters for welding/sealing can be envisioned. Typically, the seal integrity is measured by testing the tube for leaking at the working pressure recommended for specific tube size defined by an inner diameter of the tube and the wall thickness. In particular, the seal integrity test is conducted at a certain pressure and the pressure chosen is at or beyond the rated working pressure of the tube. Depending on the dimensions and properties of the material, the tube yields a burst pressure value. The value is divided by a factory of safety (for instance, a value of 5) to get a working pressure. The seal integrity test pressure should be at or higher than this rated or recommended working pressure of the tubing of a given size. For instance, the working pressure of the tube of the present invention maintains a seal without any pressure leak at 0.10 MPa (15 psi) for 30 minutes, such as greater than 0.21 MPa (30 psi) for 30 minutes.

The present embodiments can produce low toxicity articles having desirable mechanical properties. In particular, the resulting blends have desirable flexibility, substantial clarity or translucency, desirable glass transition temperatures, desirable low temperature performance, and chemical resistance to water, an acid, an alkali, an alcohol, an oil, a salt, and the like. Flexibility of the final multilayer tube is typically with a shore A of about 40 to about 90. Clarity of the flexible tube is checked visually and classified into four levels in terms of transparency: clear, translucent, hazy, and opaque. In an embodiment, the flexible tube is not opaque and may be clear or translucent. In a particular embodiment, the flexible tube is clear.

Further, the flexible tube is free of additives that may elute into process streams. In an embodiment, the flexible tube neither absorbs nor adsorbs any drug preservative that may be present within a drug formulation that flows through the tube. For instance, the drug formulation may include a pharmaceutical drug preservative, such as phenol, m-cresol, benzyl alcohol, and parabens such a methyl, propyl, or butyl parabens, in a fluid for delivery to a patient. In an embodiment, about 80%, such as 90%, or even 95% of the drug preservative is preserved within the drug formulation as it flows through the flexible tube.

Other desirable properties that may be achieved include fitting retention, kink resistance, mechanical dampening, glass transition temperature, and storage modulus. In an embodiment, the flexible tubing has desirable cold temperature performance. For instance, the flexible tubing can withstand temperatures and remain flexible at a temperature of less than about -50°C, such as less than about -60°C, or even less than about -80°C per ASTM D380. For instance, the brittleness point of the flexible tube, per ASTM-D 746, can be less than about -50°C, such as less than about -60°C, such as less than about

In an embodiment, the flexible material when formed into a tube has properties such as desirable burst pressure, tube wear (i.e. spallation of the inner diameter of the tube and fouling for the outer diameter of the tube), flow rate reduction, and surface roughness of the inner diameter. For instance, the burst pressure of a tube having an average inner diameter of 0.26 inches and an average outer diameter of 0.38 inches is greater than about 0.41 MPa (60 psi) at a temperature of about 73°F, as measured by ASTM-D 1599. In an embodiment, the tube of the present disclosure has desirable tube wear. For instance, after an average of 190 hours on a Cole-Parmer peristaltic pump using an L/S 17 standard pump head at 600 rpm with water as a medium, room temperature and zero or negligible back pressure, a flexible tube as described has an average tube wear of less than about 2.0%, such as less than about 1.5%, or even less than about 1.0%. Under equivalent conditions of the tube wear, the flow rate reduction is less than about 30%, such as less than about 15%, or even less than about 10%. The flexible tube further has a desirable surface roughness of the inner diameter such as a Ra (arithmetic mean deviation of the surface) of less than about 0.20 microns, such as less than about 0.15 microns and a Rz (mean of the distance between 5 highest peaks and 5 deepest holes) of less than about 1.0 microns, such as less than about 0.7 microns. In an embodiment, the tube has an average pump life of greater than about 168 hours, an average flow rate reduction of less than about 10% and a tube wear of less than about 1%.

Further, the flexible material has desirable binding of the proteins such as dairy protein binding and biopharm protein binding. For instance, hot milk at a temperature of about 80°C to about 85°C is circulated through an unsterilized tube for 17 seconds every 2.5 minutes for 8 hours. Under these test conditions, the milk protein binding is less than about 8.0 µg/mL, such as less than about 5.0 µg/mL, or even less than about 3.0 µg/mL with a contact angle of greater than about 65°, such as greater than about 80°, or even greater than about 95°. In an embodiment, the contact angle is about 60° to about 100° measured on a Theta lite instrument from Biolin Scientific. Biopharm protein binding is measured by exposing a gamma irradiated flexible material to a 1mg/mL solution of bovine serum and incubating for 24 hours at 37°C. The protein solution is then removed and the tubing rinsed with a phosphate buffered saline. In an embodiment, the flexible tube has biopharm protein binding of less than about 1700 ng/cm², such as less than about 600 ng/cm², such as less than about 500 ng/cm², such as less than about 450 ng/cm², or even less than about 400 ng/cm² with a contact angle of greater than about 75°, such as greater than about 80°, or even greater than about 85°. Contact angle is a measure of hydrophilicity, with 0° indicating a strongly hydrophilic surface and larger than 90° indicating a hydrophobic surface. A highly hydrophobic surface having low surface energy may have water contact angle of 120°. There are super hydrophobic surfaces having a contact angle of 150° or greater.

In exemplary embodiments, the flexible material disclosed above in relation to a flexible tube can be used in a variety of applications. Applications for the flexible tube are numerous. In particular, the non-toxic nature of the first polymer layer of the flexible tube makes the flexible tube useful for any application where toxicity is undesired. For instance, the flexible tube has potential for FDA, ADCF, USP Class VI, NSF, European Pharmacopoeia compliant, United States Pharmacopoeia (USP) compliant, USP physiochemical compliant, ISO 10993 Standard for evaluating biocompatibility of a medical device, and other regulatory approvals. In a particular embodiment, the flexible tube is non-cytotoxic, non-hemolytic, non-pyrogenic, animal-derived component-free, non-mutagenic, non-bacteriostatic, non-fungistatic, or any combination thereof.

For example, the flexible tube may be used in applications such as industrial, medical, health care, biopharmaceutical, drinking water, food & beverage such as U.S. FDA and EU regulated food contact, dairy, laboratory, and the like. In an exemplary embodiment, the flexible tube may be used in applications such as hydration tube for sports and entertainment equipment, fluid transfer tube in food and beverage processing equipment, fluid transfer tube in medical and health care, biopharmaceutical manufacturing equipment, and peristaltic pump tube for medical, lab and biopharmaceutical applications. For instance, the tube may be part of molded assemblies typically used in biopharmaceutical applications such as pumping, bioreactor processing, sampling, filling, and the like. In an embodiment, the tube may be a configured into a braided product for high purity tubing. In an embodiment, the tube may be used for high pressure pump applications. "High pressure" as used herein refers to a pressure of up to 0.55 MPa (80 psi), or even greater. In an embodiment, the high pressure is between about 0.28 MPa (40 psi) and about 0.55 MPa (80 psi), such as about 0.28 MPa (40 psi) to about 0.41 MPa (60 psi).

In a particular embodiment, a fluid source, such as a container, reactor, reservoir, tank, or bag, is coupled to a flexible tube, such as the flexible tube illustrated in FIG. 1. The flexible tube may engage a pump, fitting, valve, dispenser, or another container, reactor, reservoir, tank, or bag. In an example, the flexible tube may be coupled to a water container and may have a dispenser fitting on the distal end. In another example, the flexible tube may be coupled to a fluid bag and coupled to a valve at the distal end. In a further example, the flexible tube may be coupled to a container, be engaged in a pump, and be coupled to a second container at a distal end.

### EXAMPLES

A multilayer tube is extruded. An inner layer is extruded from any of the following materials: Ultrathene™ UE624000, an additive free EVA resin available from LyodellBasell ("Ultrathene"); an Elvax™ 460 grade of EVA resin available from DuPont ("Elvax"); Bormed SC820CF grade of an heterophasic PP random copolymer available from Borealis Group; or Flexomer™ DFDA-1137 NT7 grade of a Very Low Density Polyethyene (VLDPE) from The Dow Chemical Company ("Flexomer"); Affinity™ grade of a polyolefin plastomer available from the Dow Chemical Company ("Affinity").

An outer layer is formed of the following blend composition seen in Table 1. The outer layer is extruded over the inner layer.

**Table 1**

| Component | Amount (% by weight of total composition) |
|---|---|
| Kraton G1633-ES | 28.1 |
| 23R2A Polypropylene | 16.8 |
| Mineral oil | 55.0 |
| Irganox 1010 | 0.1 |

Kraton G1633-ES is a styrenic block copolymer. 23R2A is a polypropylene random copolymer that is resistant to radiation exposure and impact resistant. It does not contain animal derived components and is U.S. FDA and USP Class VI certified. It is available from Flint Hills Resources.

Tubing is extruded in a range of tubing sizes of 1/4x3/8 and 1/2x3/4 - ID x OD in inches. The thickness of the inner layer of the first polymer may be produced as thin as practicably allowable by process, such as a thickness of about 0.127 mm (5 mils) to about 0.254 mm (10 mils).

Tube wear is tested with a L/S 17 standard pump head, 600 RPM, 0 MPa (0 psi). The exemplary tubing passed low temperature (-50°C) testing of the flexibility, as measured by ASTM D380. The exemplary tubing passed the seal integrity test at 0.10 MPa (15 psi) for 30 minutes. Further results of the exemplary tubes can be seen in Table 2.

**Table 2**

| | Elvax | Flexomer | Ultrathene |
|---|---|---|---|
| Average Pump life (hours) | 191 | 195 | 191 |
| Average Reduction of flow rate (%) | 9.55 | 12.68 | 11.00 |
| Average Tube wear (%) | 0.82 | 0.92 | 1.06 |

Protein binding, total organic content (TOC), surface roughness, and contact angle are tested on the inner layer of the exemplary tubes before and after gamma irradiation. Results can be seen in Table 3 (Gamma) and Table 4 (Pre-gamma).

**Table 3**

| | Elvax | Flexomer | Ultrathene | Affinity |
|---|---|---|---|---|
| TOC (µg/mL) | 31.97 | 17.37 | 32.62 | 12.20 |
| Ra (microns) | 0.162 | 0.089 | 0.139 | N/A |
| Rz (microns) | 0.750 | 0.405 | 0.652 | N/A |
| Contact angle (°) | 84.53 | 83.93 | 77.99 | 71.22 |
| BSA Biopharm Protein Binding (ng/cm²) | 1677 | 470 | 412 | 580 |

**Table 4**

| | Elvax | Flexomer | Ultrathene |
|---|---|---|---|
| TOC (µg/mL) | 9.11 | 4.68 | 10.2 |
| Ra (microns) | 0.138 | 0.179 | 0.133 |
| Rz (microns) | 0.644 | 0.768 | 0.630 |
| Contact angle (°) | 81.4 | 98.5 | 68.8 |
| Milk Protein Binding (µg/mL) | 7.7 | 3.1 | 7.3 |

Many different aspects and embodiments are possible. Some of those aspects and embodiments are described herein. After reading this specification, skilled artisans will appreciate that those aspects and embodiments are only illustrative and do not limit the scope of the present invention.

## Claims

1. A flexible tube comprising:
a first polymer layer comprising a polyolefin having a density of less than 0.915 g/cc, an ethylene vinyl acetate copolymer, an ethylene/norbornene copolymer, a styrenic block copolymer, a styrene butadiene copolymer, or combination thereof having a total organics content of less than 12 µg/mL per USP 34, Chapter 643; and
a second polymer layer adjacent to the first polymer layer, the second polymer layer comprising a polyolefin, a styrenic block copolymer, a blend thereof, or combination thereof, wherein the second polymer layer has a shore A durometer of less than about 65, the shore A durometer of the second polymer layer less than a shore A durometer of the first polymer layer.

2. The flexible tube of claim 1, wherein the first polymer layer is a polyethylene, a polyolefin elastomer, or polyolefin plastomer, a reactor grade, impact resistant, heterophasic polypropylene random copolymer, an additive-free ethylene vinyl acetate, or any combination thereof.

3. The flexible tube of claim 1, wherein the second polymer layer is the blend comprising about 25% by weight to about 75% by weight of a polyethylene, polyolefin elastomer, polyolefin plastomer, or combination thereof, based on the total weight of the second polymer layer.

4. The flexible tube of claim 1, wherein the second polymer layer is the blend comprising about 5% by weight to about 40% by weight of the polypropylene polymer based on the total weight of the second polymer layer, and optionally, an oil.

5. The flexible tube of claim 4, wherein the blend comprises about 10% by weight to about 70% by weight of the styrenic block copolymer based on the total weight of the second polymer layer.

6. The flexible tube of claim 1, wherein the first polymer layer is substantially free of additives.

7. The flexible tube of claim 1, having a milk protein binding of less than about 8.0 µg/mL.

8. The flexible tube of claim 1, having a biopharm protein binding of less than about 1700 ng/cm².

9. A method of forming a flexible tube comprising:
extruding a first polymer layer comprising a polyolefin having a density of less than 0.915 g/cc, an ethylene vinyl acetate copolymer, an ethylene/norbornene copolymer, a styrenic block copolymer, a styrene butadiene copolymer, or combination thereof having a total organics content of less than 12 µg/mL per USP 34, Chapter 643; and
extruding a second polymer layer adjacent to the first polymer layer, the second polymer layer comprising a polyolefin, a styrenic block copolymer, a blend thereof, or combination thereof, wherein the second polymer layer has a shore A durometer of less than about 65, the shore A durometer of the second polymer layer less than a shore A durometer of the first polymer layer.

10. The method of claim 9, wherein the first polymer layer is a polyethylene, a polyolefin elastomer, or polyolefin plastomer, a reactor grade, impact resistant, heterophasic polypropylene random copolymer, an additive-free ethylene vinyl acetate, or any combination thereof.

11. The method of claim 9, wherein the second polymer layer is the blend comprising about 25% by weight to about 75% by weight of a polyethylene, polyolefin elastomer, polyolefin plastomer, or combination thereof, based on the total weight of the second polymer layer.

12. The method of claim 9, wherein the second polymer layer is the blend comprising about 5% by weight to about 40% by weight of the polypropylene polymer based on the total weight of the second polymer layer, and optionally, an oil.

13. The method of claim 12, wherein the blend comprises about 10% by weight to about 70% by weight of the styrenic block copolymer based on the total weight of the second polymer layer.

14. The method of claim 9, further comprising steam sterilizing the flexible tube at temperatures of at least about 121°C.

15. The method of claim 9, further comprising sealing the flexible tube.

## Patentansprüche

1. Flexibler Schlauch, der umfasst:
eine erste Polymerschicht, die ein Polyolefin mit einer Dichte von weniger als 0,915 g/cm³, ein Ethylenvinylacetatcopolymer, ein Ethylen/Norbornen-Copolymer, ein Styrolblockcopolymer, ein Styrolbutadiencopolymer oder eine Kombination davon umfasst, mit einem Gesamtgehalt an organischen Stoffen von weniger als 12 µg/ml gemäß USP 34, Kapitel 643; und
eine zweite Polymerschicht, die der ersten Polymerschicht benachbart liegt, wobei die zweite Polymerschicht ein Polyolefin, ein Styrolblockcopolymer, eine Mischung davon oder eine Kombination davon umfasst, wobei die zweite Polymerschicht einen Shore-A-Durometer-Wert von weniger als ungefähr 65 aufweist, wobei der Shore-A-Durometer-Wert der zweiten Polymerschicht geringer als der Shore-A-Durometer-Wert der ersten Polymerschicht ist.

2. Flexibler Schlauch nach Anspruch 1, wobei die erste Polymerschicht ein Polyethylen, ein Polyolefinelastomer oder ein Polyolefinplastomer, ein stoßfestes, heterophasisches Polypropylen-Random-Copolymer in Reaktorgüteklasse, ein zusatzstofffreies Ethylenvinylacetat oder eine beliebige Kombination davon ist.

3. Flexibler Schlauch nach Anspruch 1, wobei die zweite Polymerschicht die Mischung ist, die bezogen auf das Gesamtgewicht der zweiten Polymerschicht ungefähr 25 Gew.-% bis ungefähr 75 Gew.-% eines Polyethylens, Polyolefinelastomers, Polyolefinplastomers oder einer Kombination davon umfasst.

4. Flexibler Schlauch nach Anspruch 1, wobei die zweite Polymerschicht die Mischung ist, die bezogen auf das Gesamtgewicht der zweiten Polymerschicht ungefähr 5 Gew.-% bis ungefähr 40 Gew.-% des Polypropylenpolymers und optional ein Öl umfasst.

5. Flexibler Schlauch nach Anspruch 4, wobei die Mischung bezogen auf das Gesamtgewicht der zweiten Polymerschicht ungefähr 10 Gew.-% bis ungefähr 70 Gew.-% des Styrolblockcopolymers umfasst.

6. Flexibler Schlauch nach Anspruch 1, wobei die erste Polymerschicht im Wesentlichen frei von Zusatzstoffen ist.

7. Flexibler Schlauch nach Anspruch 1 mit einer Milchproteinbindung von weniger als ungefähr 8,0 µg/ml .

8. Flexibler Schlauch nach Anspruch 1 mit einer Bindung biopharmazeutischen Proteins von weniger als ungefähr 1700 ng/cm².

9. Verfahren zum Bilden eines flexiblen Schlauchs, das umfasst:
Extrudieren einer ersten Polymerschicht, die ein Polyolefin mit einer Dichte von weniger als 0,915 g/cm³, ein Ethylenvinylacetatcopolymer, ein Ethylen/Norbornen-Copolymer, ein Styrolblockcopolymer, ein Styrolbutadiencopolymer oder eine Kombination davon umfasst, mit einem Gesamtgehalt an organischen Stoffen von weniger als 12 µg/ml gemäß USP 34, Kapitel 643; und
Extrudieren einer zweiten Polymerschicht, die der ersten Polymerschicht benachbart liegt, wobei die zweite Polymerschicht ein Polyolefin, ein Styrolblockcopolymer, eine Mischung davon oder eine Kombination davon umfasst, wobei die zweite Polymerschicht einen Shore-A-Durometer-Wert von weniger als ungefähr 65 aufweist, wobei der Shore-A-Durometer-Wert der zweiten Polymerschicht geringer als der Shore-A-Durometer-Wert der ersten Polymerschicht ist.

10. Verfahren nach Anspruch 9, wobei die erste Polymerschicht ein Polyethylen, ein Polyolefinelastomer oder ein Polyolefinplastomer, ein stoßfestes, heterophasisches Polypropylen-Random-Copolymer in Reaktorgüteklasse, ein zusatzstofffreies Ethylenvinylacetat oder eine beliebige Kombination davon ist.

11. Verfahren nach Anspruch 9, wobei die zweite Polymerschicht die Mischung ist, die bezogen auf das Gesamtgewicht der zweiten Polymerschicht ungefähr 25 Gew.-% bis ungefähr 75 Gew.-% eines Polyethylens, Polyolefinelastomers, Polyolefinplastomers oder einer Kombination davon umfasst.

12. Verfahren nach Anspruch 9, wobei die zweite Polymerschicht die Mischung ist, die bezogen auf das Gesamtgewicht der zweiten Polymerschicht ungefähr 5 Gew.-% bis ungefähr 40 Gew.-% des Polypropylenpolymers und optional ein Öl umfasst.

13. Verfahren nach Anspruch 12, wobei die Mischung bezogen auf das Gesamtgewicht der zweiten Polymerschicht ungefähr 10 Gew.-% bis ungefähr 70 Gew.-% des Styrolblockcopolymers umfasst.

14. Verfahren nach Anspruch 9, das ferner das Dampfsterilisieren des flexiblen Schlauchs bei Temperaturen von zumindest ungefähr 121 °C umfasst.

15. Verfahren nach Anspruch 9, das ferner das Versiegeln des flexiblen Schlauchs umfasst.

## Revendications

1. Tuyau souple comprenant :
une première couche de polymère comprenant une polyoléfine ayant une densité inférieure à 0,915 g/cm³, un copolymère d'éthylène et d'acétate de vinyle, un copolymère d'éthylène et de norbornène, un copolymère à blocs styréniques, un copolymère de styrène et de butadiène ou une combinaison de ceux-ci ayant une teneur totale en matière organique inférieure à 12 µg/mL selon la norme USP 34, chapitre 643 ; et
une seconde couche de polymère adjacente à la première couche de polymère, la seconde couche de polymère comprenant une polyoléfine, un copolymère à blocs styréniques, un mélange de ceux-ci ou une combinaison de ceux-ci, la seconde couche de polymère ayant une durométrie Shore A inférieure à environ 65, la durométrie Shore A de la seconde couche de polymère étant inférieure à la durométrie Shore A de la première couche de polymère.

2. Tuyau souple selon la revendication 1, dans lequel la première couche de polymère est un polyéthylène, un élastomère de polyoléfine ou un plastomère de polyoléfine, un copolymère statistique de polypropylène de qualité réacteur, résistant aux chocs, hétérophasique, un polymère d'éthylène et d'acétate de vinyle sans adjuvant ou toute combinaison de ceux-ci.

3. Tuyau souple selon la revendication 1, dans lequel la seconde couche de polymère est le mélange comprenant environ 25 % en poids à environ 75 % en poids d'un polyéthylène, d'un élastomère de polyoléfine, d'un plastomère de polyoléfine ou d'une combinaison de ceux-ci, en fonction du poids total de la seconde couche de polymère.

4. Tuyau souple selon la revendication 1, dans lequel la seconde couche de polymère est le mélange comprenant environ 5 % en poids à environ 40 % en poids du polymère de polypropylène, en fonction du poids total de la seconde couche de polymère, et en option, une huile.

5. Tuyau souple selon la revendication 4, dans lequel le mélange comprend environ 10 % en poids à environ 70 % en poids du copolymère à blocs styréniques, en fonction du poids total de la seconde couche de polymère.

6. Tuyau souple selon la revendication 1, dans lequel la première couche de polymère est sensiblement exempte d'adjuvants.

7. Tuyau souple selon la revendication 1, présentant une liaison de protéine du lait inférieure à environ 8,0 µg/mL.

8. Tuyau souple selon la revendication 1, dont la liaison de protéine biopharmaceutique est inférieure à environ 1 700 ng/cm².

9. Procédé de formation d'un tube souple comprenant :
l'extrusion d'une première couche de polymère comprenant une polyoléfine ayant une densité inférieure à 0,915 g/cm³, un copolymère d'éthylène et d'acétate de vinyle, un copolymère d'éthylène et de norbornène, un copolymère à blocs styréniques, un copolymère de styrène et de butadiène ou une combinaison de ceux-ci présentant une teneur totale en matière organique inférieure à 12 µg/mL selon la norme USP 34, chapitre 643 ; et
l'extrusion d'une seconde couche de polymère adjacente à la première couche de polymère, la seconde couche de polymère comprenant une polyoléfine, un copolymère à blocs styréniques, un mélange de ceux-ci ou une combinaison de ceux-ci, la seconde couche de polymère ayant une durométrie Shore A inférieure à environ 65, la durométrie Shore A de la seconde couche de polymère étant inférieure à la durométrie Shore A de la première couche de polymère.

10. Procédé selon la revendication 9, dans lequel la première couche de polymère est un polyéthylène, un élastomère à base de polyoléfine ou un plastomère à base de polyoléfine, un copolymère statistique de polypropylène de qualité réacteur, résistant aux chocs, hétérophasique, un polymère d'éthylène et d'acétate de vinyle sans adjuvant ou toute combinaison de ceux-ci.

11. Procédé selon la revendication 9, dans lequel la seconde couche de polymère est le mélange comprenant environ 25 % en poids à environ 75 % en poids d'un polyéthylène, d'un élastomère de polyoléfine, d'un plastomère de polyoléfine ou d'une combinaison de ceux-ci, en fonction du poids total de la seconde couche de polymère.

12. Procédé selon la revendication 9, dans lequel la seconde couche de polymère est le mélange comprenant environ 5 % en poids à environ 40 % en poids du polymère de polypropylène, en fonction du poids total de la seconde couche de polymère, et en option, une huile.

13. Procédé selon la revendication 12, dans lequel le mélange comprend environ 10 % en poids à environ 70 % en poids du copolymère à blocs styréniques, en fonction du poids total de la seconde couche de polymère.

14. Procédé selon la revendication 9, comprenant en outre la stérilisation à la vapeur du tube souple à des températures d'au moins environ 121 °C.

15. Procédé selon la revendication 9, comprenant en outre le scellement du tube souple.
